Europäisches Patentamt

European Patent Office

Office européen des brevets

(11) Veröffentlichungsnummer: **0 303 722 B1**

## (12) EUROPÄISCHE PATENTSCHRIFT

(45) Veröffentlichungstag der Patentschrift: **01.07.92**

(21) Anmeldenummer: **87111978.0**

(22) Anmeldetag: **18.08.87**

Teilanmeldung 91113399.9 eingereicht am 18/08/87.

(51) Int. Cl.5: **G01N 21/89**, B60H 1/00, B60H 3/00

(54) Verfahren und Vorrichtung zum Erfassen und Behandeln von Fehlern in Stoffbahnen.

(43) Veröffentlichungstag der Anmeldung:
**22.02.89 Patentblatt 89/08**

(45) Bekanntmachung des Hinweises auf die Patenterteilung:
**01.07.92 Patentblatt 92/27**

(84) Benannte Vertragsstaaten:
**AT CH DE ES FR GB IT LI**

(56) Entgegenhaltungen:
EP-A- 0 069 061      DE-A- 2 525 973
DE-A- 3 401 826      GB-A- 1 077 561
GB-A- 2 023 201      GB-A- 2 025 083
GB-A- 2 143 320      US-A- 3 094 368

PATENT ABSTRACTS OF JAPAN, Band 10,
Nr. 291 (M-522) (2347) 3. Oktober 1986; &
JP-A-61 106 372

(73) Patentinhaber: **Krauss u. Reichert GmbH + Co. KG Spezialmaschinenfabrik**
**Stuttgarter Strasse 68**
**W-7012 Fellbach(DE)**

(72) Erfinder: **Jung, Rolf**
**Im Sämann 14,**
**W-7050 Waiblingen(DE)**
Erfinder: **Buss, Albert**
**Buchrainstrasse 4**
**W-7420 Münsingen(DE)**
Erfinder: **Breckel, Ulf**
**Neuffner Strasse 1**
**W-7441 Kohlberg(DE)**
Erfinder: **Buchmann, Winfried**
**Ludwig-Speidel-Strasse 65**
**W-7254 Hemmingen(DE)**

(74) Vertreter: **Hoeger, Stellrecht & Partner**
**Uhlandstrasse 14 c**
**W-7000 Stuttgart 1(DE)**

EP 0 303 722 B1

**Beschreibung**

Die Erfindung betrifft ein Verfahren und eine Vorrichtung zum Erfassen eines Fehlers in einer Stoffbahn.

Insbesondere betrifft die Erfindung ein Verfahren zum Erfassen eines Fehlers in einer Stoffbahn im Rahmen einer Fehlerschau, bei welchem der Fehler dadurch registriert wird, dass dessen Position in X-Richtung durch eine auf der Warenbahn gesetzte Marke und mindestens eine weitere Positionsangabe zusammen mit einer Bezeichnung der Marke festgehalten wird.

Ferner betrifft die Erfindung eine Warenschaumaschine zum Erfassen von Fehlern auf einer Stoffbahn, insbesondere zur Durchführung des vorstehend genannten Verfahrens, mit einer Warenschaufläche, mit einer Abwickeleinrichtung, mit einer Aufwickeleinrichtung und mit einer Registriereinrichtung für den Fehler, welche eine Rechnereinheit mit einem Datenspeicher sowie einer Eingabeeinrichtung für eine Bezeichnung von auf der Stoffbahn zur Kennzeichnung einer X-Position der Fehler gesetzten Marken und für mindestens eine weitere Positionsangabe aufweist.

Aus der DE-OS 34 01 826 ist ein Verfahren und eine Vorrichtung bekannt, bei welchem der Fehler im Rahmen einer Warenschau durch ein direkt auf diesem aufgeklebtes Plättchen markiert wird. Beim anschliessenden Legen der Stoffbahn wird dieses Plättchen dann an der Legemaschine durch einen Detektor erkannt und dann nochmals die genaue Lage des Fehlers relativ zum Schnittbild ermittelt, mit letzterem verglichen und das entsprechend der jeweiligen Fehlerlage erforderliche Fehlerbehandlungsverfahren eingeleitet.

Ferner ist aus einer Vortragszusammenfassung von Norman E. Witthauer aus den Conference Proceedings zu der Konferenz "Advanced Apparel-Cutting and Utilization Technology", "The Cutting Room of the Future" ein Verfahren und eine Vorrichtung zur Fehlererkennung bekannt, bei welchem der Fehler auf einer Warenschaumaschine festgestellt, seine X-Position, d.h. seine Position in Längsrichtung der Stoffbahn, mit einer auf die Stoffbahn aufgebrachten Marke gekennzeichnet sowie die Y-Position des Fehlers, d.h. sein Abstand zu einer Seiten- oder Längskante der Warenbahn als Bezugspunkt in einem Datenspeicher zusammen mit einer Bezeichnung der Marke entsprechend ihrer Reihenfolge auf der Stoffbahn abgelegt wird.

Beim anschliessenden Legen der Stoffbahn werden dann die Marken von einem an der Legemaschine gehaltenen Detektor ihrer Reihenfolge nach erkannt, so dass aus den zusätzlich auf die Legemaschine überspielten Daten die zur jeweiligen Marke gehörige X/Y-Position des Fehlers entnommen werden kann und durch die mittels des Detektors festgestellte X-Position der Marke sowie die aus den Daten entnehmbare Y-Position des Fehlers dieser lokalisierbar ist. Nach dem Lokalisieren des Fehlers wird dann dessen Ausdehnung ermittelt, mit dem Schnittbild verglichen und dann festgestellt, ob der Fehler in einem späteren Zuschnitteil liegt oder nicht, so dass abhängig davon die weitere Vorgehensweise betreffend das Überlappendlegen bestimmt werden kann.

Dieses bekannte Verfahren hat den Nachteil, dass damit bei der Warenschau der Fehler zwar als solcher lokalisiert wird, dass diese Information jedoch nicht ausreicht, um beim Legen ohne nochmalige detaillierte Erfassung des Fehlers einen Schnittbildvergleich so zu führen, daß die Position des Fehlers als solche für die Frage, welche Zuschnitteile durch den Fehler tangiert werden, keine ausreichende Information darstellt. Bei dem bekannten Verfahren wird also zusätzlich zur Warenschau der Fehler beim Auslegen nochmals genau erfasst, so dass der Fehler als solcher zweimal inspiziert werden muss und ausserdem ein automatisches Legen, das heutzutage mit grosser Legegeschwindigkeit möglich wäre, aufgrund der Unterbrechungen durch die Fehlerinspektion nicht möglich ist.

Der Erfindung liegt daher die Aufgabe zugrunde, Verfahren und Vorrichtungen der gattungsgemässen Art zu schaffen, bei denen ein Fehler lediglich einmal erfaßt werden muss und bei welchem die im Rahmen des Auslegens der Stoffbahn eine möglichst stoffsparende Fehlerbehandlung ohne erneute Inspektion des Fehlers möglich ist.

Diese Aufgabe wird bei einem Verfahren zum Erfassen eines Fehlers in einer Stoffbahn der eingangs beschriebenen Art erfindungsgemäss dadurch gelöst, dass als weitere Positionsangaben X- und Y-Werte einer eine Begrenzungslinie um den Fehler festlegenden Punktschar ermittelt und abgespeichert werden und dass für deren X- und Y-Werte die Marke bzw. eine Seitenkante der Stoffbahn als Bezugspunkt dienen.

Der Vorteil des erfindungsgemässen Verfahrens ist also darin zu sehen, dass anstelle der bisher bekannten punktförmigen Ermittlung des Fehlers im Rahmen der Warenschau die Ermittlung einer Begrenzungslinie des Fehlers erfolgt, da durch die bisher durchgeführte punktförmige Ermittlung der Fehler in seiner Ausdehnung nicht erfasst wird. Das erfindungsgemässe Verfahren ermittelt also somit nicht die Position des Fehlers selbst, die später für einen Schnittbildvergleich nicht ausreichend ist, sondern es ermittelt sofort die eigentlich für den Schnittbildvergleich relevante Ausdehnung des Fehlers durch die Bestimmung einer Begrenzungslinie. Dadurch, dass die Begrenzungslinie des Fehlers festgelegt wird, ist später beim Auslegen der Stoffbahn eindeutig klar, welcher Bereich der Stoffbahn nicht in einem späteren Zuschnittteil liegen darf und, wenn dies der Fall ist, welches Teil ggf. durch Überlappendlegen neu ausgelegt werden muss.

Damit ist durch das erfindungsgemässe Verfahren zum Erfassen eines Fehlers dieser für sämtliche weiteren Verfahrensschritte eindeutig und ausreichend definiert, so dass bei sämtlichen nachfolgenden Verfahrensschritten eine Inspektion des Fehlers unterbleiben kann und insbesondere die Möglichkeit besteht, diese nachfolgenden Verfahrensschritte automatisch durchführen zu können.

Ein weiterer Vorteil der erfindungsgemässen Lösung ist darin zu sehen, dass durch die Festlegung der Begrenzungslinie um den Fehler in X-Richtung unter Bezugnahme auf die Position der Marke eine sehr grosse Genauigkeit beim Reproduzieren der Begrenzungslinie beim späteren Legen, vor allem bei verzugsempfindlichen Stoffen erreichbar ist, da die Position der Marke, auf welche die die Begrenzungslinie festlegende Punktschar hinsichtlich ihrer X-Koordinate bezogen ist, auch bei einem starken Verzug der gesamten Stoffbahn beim Auslegen unverändert erhalten bleibt, so dass selbst ein starker Verzug der Stoffbahn nur unwesentliche Auswirkungen auf die reproduzierte Lage der Begrenzungslinie hat.

Um die Marke auf der Stoffbahn möglichst rationell setzen und später auch möglichst einfach detektieren zu können hat es sich als vorteilhaft erwiesen, wenn die Marke auf dem Randbereich der Stoffbahn aufgebracht wird.

Im Rahmen des erfindungsgemässen Verfahrens sind grundsätzlich zwei Möglichkeiten zum Aufbringen der Marken auf die Stoffbahn denkbar. Die erste Möglichkeit sieht vor, dass die Marken bei der Warenschau in kontinuierlichen Abständen auf der Stoffbahn gesetzt werden und dann die Begrenzungslinie eines möglicherweise auftretenden Fehlers in Relation zur letzten gesetzten Marke abgespeichert wird. Die zweite Möglichkeit des erfindungsgemässen Verfahrens sieht vor, dass nur dann, wenn ein Fehler entdeckt wird, eine Marke gesetzt und die Begrenzungslinie dann in Bezug auf diese Marke abgespeichert wird.

Während bei der ersten Möglichkeit des erfindungsgemässen Verfahrens in der Regel prinzipiell ein Abstand zwischen der Marke und der Begrenzungslinie vorliegt, da die Positionen der in gleichen Abständen gesetzten Marken in der Regel nicht mit der X-Position der Fehler zusammenfallen, hat es sich auch bei der zweiten Möglichkeit des erfindungsgemässen Verfahrens als vorteilhaft erwiesen, wenn die Marke gegenüber der Begrenzungslinie in X-Richtung im Abstand angeordnet wird.

Ein besonders bevorzugtes Ausführungsbeispiel bei beiden Möglichkeiten des erfindungsgemässen Verfahrens sieht vor, dass die Marke in Wickelrichtung gesehen hinter der Begrenzungslinie angeordnet wird. Dies erleichtert zum einen den Verfahrensablauf bei der Warenschau, da zuerst die die Begrenzungslinie definierte Punktschar ermittelt werden kann und erst danach, in Wickelrichtung gesehen, also hinter der Begrenzungslinie die Marke aufgebracht werden muss. Ferner hat man beim späteren Legen, bei welchem die Stoffbahn in umgekehrter Richtung als bei der Warenschau abgewickelt wird, den Vorteil, dass zuerst die Marke erscheint und dann die zu dieser Marke gehörige und hinsichtlich ihrer X-Werte auf diese Marke bezogene Begrenzungslinie des Fehlers. Dies gibt ausserdem beim Legen der Warenbahn die Möglichkeit, bereits bei Auftreten der Marke einen Bremsvorgang bei der Legemaschine einzuleiten und zusätzlich schon mit dem Schnittbildvergleich zu beginnen, so dass bereits bevor die Begrenzungslinie auf der auszulegenden Lage erscheint entschieden ist, ob und an welcher Stelle überlappend weitergelegt werden muss oder nicht.

Insbesondere bei der zweiten Möglichkeit des erfindungsgemässen Verfahrens bietet es sich dann noch zusätzlich an, wenn die Marke und die Begrenzungslinie um eine einen Bremsweg einer Legemaschine entsprechende Strecke gegeneinander versetzt angeordnet sind, d.h. es besteht die Möglichkeit, bei der Bemessung des Abstands zwischen der Begrenzungslinie und der Marke bereits den Bremsweg der Legemaschine zu berücksichtigen.

Bei den bisher beschriebenen Ausführungsbeispielen des erfindungsgemässen Verfahrens wurde nicht im einzelnen festgelegt, wie die Bezeichnung der Marke erfolgen soll. Die einfachste Möglichkeit des erfindungsgemässen Verfahrens sieht vor, dass die Bezeichnung der Marken entsprechend ihrer Reihenfolge durchgeführt wird, d.h. dass den Marken aufeinanderfolgende Nummern zugeordnet werden.

Diese Methode hat allerdings dann zur Folge, dass beim späteren Legen der Stoffbahn berücksichtigt werden muss, dass die Marken mit ihren Nummern in umgekehrter Reihenfolge auftreten.

Eine verbesserte Ausführungsform des erfindungsgemässen Verfahrens sieht daher vor, dass die Marke zur Bezeichnung mit einem maschinenlesbaren Erkennungscode versehen wird. In diesem Fall müssen die Marken nicht zwangsläufig entsprechend ihrer Reihenfolge bezeichnet werden, sondern es besteht die Möglichkeit, willkürliche Bezeichnungen von Marke zu Marke zu wählen, da später durch Lesen des Erkennungscodes die jeweils zu dieser Marke abgelegten Positionsangaben wieder auffindbar sind. Desweiteren hat dieses verbesserte Ausführungsbeispiel den Vorteil, dass dann, wenn vor dem Legen eine der Marken abfällt, den weiteren Marken wiederum die richtige Begrenzungslinie zugeordnet wird, wohingegen dann,wenn die Marken lediglich nach ihrer Reihenfolge bezeichnet werden, beim Abfallen einer Marke der nächsten Marke die falsche Begrenzungslinie, nämlich die der abgefallenen Marke zugeordnet wird.

Die codierten Marken können prinzipiell in unterschiedlicher Art und Weise lesbar sein. So wäre es beispielsweise im Rahmen der vorliegenden Erfindung möglich, dass die Marken induktiv ablesbar gekennzeichnet werden.

Eine noch einfachere Möglichkeit der Codierung der Marken sieht vor, dass die Marken optisch ablesbar gekennzeichnet werden.

Bei einer bevorzugten Form der Kennzeichnung werden die Marken mit mehreren in Längsrichtung der Stoffbahn aufeinanderfolgende optisch erkennbaren Schichten versehen.

Als Erkennungscode wird vorzugsweise ein Balkencode aufgebracht. Dieser ist vorteilhafterweise von allen Richtungen lesbar, so daß das Abwikkeln der Stoffbahn beim Legen in entgegengesetzter Richtung zur Wickelrichtung bei der Warenschau keine Probleme bereitet.

Eine weitere Ausführungsform, bei der sich das Ablegen der X/Y-Werte der die Begrenzungslinie definierenden Punktschar auf einem getrennten Datenspeicher erübrigt, sieht vor, dass die Daten der Begrenzungslinie auf der Marke maschinenlesbar vermerkt werden, so dass die Marke selbst gleichzeitig als Datenspeicher für die die Begrenzungslinie definierende Punktschar dient. In diesem Fall könnte auch ein Erkennungscode auf der Marke entfallen, da eine Fehlzuordnung der Begrenzungslinie zu der jeweiligen Marke ausgeschlossen ist.

Bei den bisher beschriebenen Ausführungsbeispielen des erfindungsgemässen Verfahrens wurde nicht näher erläutert, wie der Bezugspunkt für die X-Werte der die Begrenzungslinie definierenden Punktschar gewählt werden soll. Im einfachsten Fall kann die Marke selbst als Bezugspunkt gewählt werden. Dies hat jedoch den Nachteil, dass die Ortsauflösung in X-Richtung durch die Grösse der Marke begrenzt ist. Aus diesem Grund ist es vorteilhaft, wenn der Bezugspunkt auf der Marke maschinenlesbar aufgebracht wird, so dass durch Lesen des auf der Marke aufgebrachten Bezugspunktes eine wesentlich höhere Auflösung in X-Richtung erreichbar ist.

Desweiteren besteht die Gefahr, dass ein auf der Marke aufgebrachter Bezugspunkt, beispielsweise durch eine Verschiebung der Stoffbahn quer zu ihrer Längsrichtung nicht richtig identifiziert werden kann und beispielsweise mit dem Erkennungscode verwechselt wird. Aus diesem Grund ist es vorteilhaft, wenn der Bezugspunkt mit einem Identi

fizierungscode versehen wird, so dass keine Verwechslung mit dem Erkennungscode der Marke mehr möglich ist.

Die einfachste Möglichkeit der Festlegung des Bezugspunktes sieht vor, dass dieser durch eine quer zu einer Koordinatenrichtung verlaufende Bezugslinie definiert wird. Dabei kann dieser Bezugspunkt prinzipiell auch ausserdem noch ein Bezugspunkt für die Koordinaten in Y-Richtung sein, was beispielsweise dann vorteilhaft ist, wenn eine Stoffbahn keine eindeutig definierte Seitenkante zeigt, so dass ein Bezug der Y-Koordinaten auf die Seitenkante bei dem jeweiligen X-Wert einen zu großen Fehler mit sich bringen würde und daher durch den Bezugspunkt nur an einer Stelle ein Bezug zur Seitenkante hergestellt wird.

Wenn bei dem erfindungsgemässen Verfahren zur Ermittlung der Y-Koordinate, definiert als Abstand von einer Seitenkante der Stoffbahn auf die Seitenkante Bezug genommen werden muss, so besteht das Problem, dass bei der Warenschau häufig die Stoffbahn schräg über die jeweilige Warenschaufläche gezogen wird, so dass ohne zusätzliche Maßnahmen keine genaue Festlegung der Lage der Seitenkante möglich ist.

Aus diesem Grund sieht eine Möglichkeit des erfindungsgemässen Verfahrens vor, dass die Stoffbahn zur Warenschau kantengesteuert vorgelegt wird, so dass die Lage der Seitenkante der Stoffbahn eindeutig definiert ist.

Alternativ dazu ist es aber auch möglich und weniger aufwendig, wenn zu jeder Messung eines der Y-Werte unter Konstanthaltung des X-Werts die Lage der Seitenkante ermittelt und ausgehend von dieser der Y-Wert bestimmt wird. Das heißt also, dass die Lage der Seitenkante ohne Bedeutung ist, da zu jeder Messung eines Y-Wertes die jeweilige Lage der Seitenkante genau erfasst wird. Bei dem vorstehend beschriebenen Verfahren der Bestimmung des Y-Wertes kann diese Bestimmung in unterschiedlicher Art und Weise durchgeführt werden. Eine erste Art der Bestimmung sieht vor, dass die Lage der Seitenkante bei dem jeweiligen X-Wert gemessen wird.

Diese Messung ist unter Umständen umständlich, so dass es vorteilhafter und in vielen Fällen hinsichtlich der erreichbaren Genauigkeit ausreichend ist, wenn die Lage der Seitenkante in Abwikkelrichtung gesehen vor und hinter einem Warenschaubereich festgestellt und die dem jeweiligen X-Wert entsprechende Lage der Seitenkante durch Interpolation ermittelt wird.

Als wesentlicher Vorteil des bisher beschriebenen Verfahrens wurde die Tatsache angesehen, dass die Begrenzungslinie des Fehlers unter Bezugnahme auf die Marke erfasst und abgespeichert wird, so dass ein Verzug der Warenbahn ohne nennenswerte Auswirkungen auf die spätere Re

produktion der Begrenzungslinie bleibt. Es hat sich jedoch zur Grobsteuerung des auf die Warenschau folgenden Legeverfahrens bei einem weiteren komfortableren Ausführungsbeispiel des erfindungsgemässen Verfahrens als vorteilhaft erwiesen, wenn eine ungefähre X-Position der Marke im Abstand von einem Anfang der Stoffbahn erfasst und abgespeichert wird. Dadurch wird die durch die Zuordnung der Begrenzungslinie zur jeweiligen Marke erreichte Genauigkeit nicht beeinträchtigt, es ist jedoch für eine optimale Steuerung des nachfolgenden Legeverfahrens von Vorteil, wenn bereits im voraus ermittelt werden kann, an welcher X-Position der Stoffbahn mit einer Marke und einem darauffolgenden Fehler zu rechnen ist.

Die erfindungsgemässe Aufgabe wird ausserdem bei einer Warenschaumaschine der eingangs beschriebenen Art erfindungsgemäss dadurch gelöst, dass die Registriereinrichtung eine vorzugsweise maschinengesteuerte Markensetzeinrichtung sowie ein in X- und Y-Richtung relativ zu der Stoffbahn verfahrbares Markierungselement zum Erfassen einer eine Begrenzungslinie des Fehlers festlegenden Punktschar umfasst, dass die mit dem Markierungselement angefahrenen X- und Y-Werte der Punktschar durch Wegaufnehmer in Abhängigkeit von einem durch die Marke definierten Bezugspunkt bzw. einer Seitenkante der Stoffbahn erfassbar und auf die Eingabeeinrichtung übertragbar sind und dass die Rechnereinheit so aufgebaut ist, dass sie der Bezeichnung der Marke als weitere Positionsangaben die X- und Y-Werte der Punktschar der Begrenzungslinie zuordnet und abspeichert.

Der Vorteil der erfindungsgemässen Warenschaumaschine ist darin zu sehen, dass die Erfassung des Fehlers dadurch, dass eine Bedienungsperson mit dem Markierungselement die Begrenzungslinie des Fehlers abfährt und die Warenschaumaschine automatisch die die Begrenzungslinie definierende Punktschar mit ihren X- und Y-Werten bezogen auf die Marke bzw. eine Seitenkante der Stoffbahn ermittelt und zusammen mit der Bezeichnung der Marke abspeichert, dass eine automatische Weiterverarbeitung der Stoffbahn unter Berücksichtigung des Fehlers möglich ist.

Bei der vorstehend beschriebenen Warenschaumaschine sind prinzipiell zwei Möglichkeiten der Aufnahme der Erstreckung der Begrenzungslinie relativ zu der Position der Marke in X-Richtung denkbar. Die erste Möglichkeit sieht vor, dass die Stoffbahn von einer Markenpositionierstellung aus in X-Richtung hin und her verfahrbar ist und dass der X-Wegaufnehmer die Bewegungen der Warenbahn erfasst. Bei diesem Ausführungsbeispiel der Warenschaumaschine wird also das Markierungselement selbst relativ zu der Warenschaumaschine lediglich in Y-Richtung, d.h. quer zur Längsrichtung der Stoffbahn bewegt, während eine Relativbewegung zwischen der Warenbahn und dem Markierungselement in X-Richtung durch Hin- und Herverfahren der Warenbahn in dieser Richtung erreichbar ist. Dieser Aufbau der Warenschaumaschine eignet sich besonders für solche Fälle, bei denen die Fehler eine wesentlich grössere Erstreckung in X-Richtung als die Warenschaufläche aufweisen, da die Stoffbahn relativ zu dem Markierungselement über beliebige Strecken verfahren werden kann.

Die vorstehend beschriebene Ausbildung der Warenschaumaschine ist jedoch dann nachteilig, wenn die Stoffbahnen sehr verzugsempfindlich sind, da durch das ständige Hin und Herfahren bei der Ermittlung der X-Werte der Begrenzungslinie die Stoffbahn verzogen wird, was als solches unerwünscht ist, und ausserdem noch ein zusätzlicher Meßfehler, bedingt durch den Verzug, auftritt. Aus diesem Grund ist es insbesondere dann, wenn verzugsempfindliche Stoffbahnen einer Warenschau unterzogen werden sollen von Vorteil, wenn die Warenschaumaschine so ausgebildet ist, dass das Markierungselement bezüglich der Warenschaufläche von einer X-Ausgangsstellung aus in X-Richtung verfahrbar ist und der X-Wegaufnehmer die Bewegung des Markierungselements relativ zur Warenschaufläche erfasst. Bei dieser Ausbildung ist also das Markierungselement selbst sowohl in X- als auch in Y-Richtung relativ zur Warenschaufläche bewegbar. Sollte sich bei einer derartigen Warenschaumaschine ein Fehler über die Erstrekkung der Warenschaufläche in X-Richtung ausdehnen, so ist dieser Fehler durch zwei aufeinanderfolgende und sich überlappende Begrenzungslinien zu erfassen.

Bei den bisher beschriebenen Ausführungsbeispielen wurde nicht näher auf die Art der mechanischen Halterung des Markierungselements an der Warenschaumaschine eingegangen. So sieht beispielsweise ein Ausführungsbeispiel vor, dass das Markierungselement an einem Gelenkarm gehalten ist, so dass dann die Wegaufnehmer die Gelenkbewegungen dieses Gelenkarms erfassen und in Wegstrecken in die jeweilige Richtung transformieren müssen.

Eine einfachere konstruktive Lösung insbesondere des zweiten Ausführungsbeispiels der erfindungsgemässen Warenschaumaschine sieht vor, dass das Markierungselement auf einem X-Schlittensystem gehalten ist. In Verbindung damit bietet es sich dann an, dass das Markierungselement ebenfalls auf einem Y-Schlittensystem gehalten ist.

Wenn im Zusammenhang mit dem erfindungsgemässen Verfahren gleichzeitig mit jeder Messung eines Y-Werts auch die Position der Seitenkante der Stoffbahn zu diesem Y-Wert bei konstantem X-Wert ermittelt werden soll, wirde eine konstruktive Möglichkeit darin bestehen, die Warenschaumaschine so auszubilden, dass mit dem Markierungselement sowohl die Lage der Seitenkante als auch der jeweilige Y-Wert bei konstantem X-Wert erfasst werden kann. Um ein derartiges Hin- und Herfahren zwischen der Seitenkante und dem zu erfassenden X-Wert zu umgehen, ist bei einer bevorzugten Ausführungsform vorgesehen, dass eine der X-Position des Markierungselements entsprechend gehaltene Seitenkantenmeßeinrichtung vorgesehen ist, die automatisch die jeweilige Lage der Seitenkante ermittelt.

Wie bereits in Zusammenhang mit dem erfindungsgemässen Verfahren beschrieben ist es vorteilhaft, wenn die Marke relativ zu der Begrenzungslinie in Wickelrichtung gesehen hinter dieser angeordnet ist. Aus diesem Grund ist die Markensetzeinrichtung relativ zu dem Markierungselement entgegen der Wickelrichtung der Warenbahn versetzt angeordnet.

Bei einer fest an der Warenschaumaschine gehaltenen Markensetzeinrichtung treten jedoch dann Probleme auf, wenn die Stoffbahn der Warenschaufläche nicht seitenkantengesteuert zugeführt wird, da dann die Markensetzeinrichtung die Marken in unterschiedlichem Abstand von der Seitenkante der Stoffbahn setzt. Dies kann später beim Legen der Stoffbahn zu Schwierigkeiten führen, da keine genaue Position der Marken quer zur Längsrichtung mehr vorgegeben ist. Aus diesem Grund ist es vorteilhaft, wenn die Markensetzeinrichtung seitenkantengesteuert in Y-Richtung auf die Stoffbahn zustellbar ist, so dass die jeweilige Marke, bedingt durch die Seitenkantensteuerung stets im selben Abstand von der Seitenkante gesetzt wird.

Wie bereits in Zusammenhang mit dem erfindungsgemässen Verfahren erläutert,ist es vorteilhaft, wenn die Marke mit einem maschinenlesbaren Erkennungscode versehen ist.

Hierzu hat es sich als nützlich erwiesen, wenn die Markensetzeinrichtung mit einem Druckwerk zum Aufbringen des Erkennungscodes auf die Marke versehen ist, so dass die Marken nicht bereits von vornherein mit dem Erkennungscode bedruckt sein müssen.

Vorteilhafterweise handelt es sich bei dem Erkennungscode um einen Balkencode, so dass das Druckwerk einen Balkencode zu drucken hat, welcher zweckmässigerweise in Wickelrichtung lesbar ist.

Ferner wurde ebenfalls bereits in Zusammenhang mit dem erfindungsgemässen Verfahren erwähnt, dass es nützlich ist, wenn die Marke mit einem maschinenlesbaren Bezugspunkt versehen ist. Dieser Bezugspunkt ist im einfachsten Fall durch einen quer zur jeweiligen Koordinatenrichtung verlaufenden Balken definiert, dem sicherheitshalber noch ein bevorzugterweise ebenfalls als Balkencode ausgebildeter Identifizierungscode zugeordnet ist.

Im Zusammenhang mit dem erfindungsgemässen Verfahren wurde bereits erwähnt, dass eine genaue Festlegung der Seitenkante der Stoffbahn notwendig ist, um den Fehler bei der Bestimmung des jeweiligen Y-Wertes möglichst gering zu halten. So ist es daher denkbar, die Warenbahn der Warenschaufläche kantengesteuert zuzuführen. Da dies jedoch konstruktiv sehr aufwendig ist, ist bei einem bevorzugten Ausführungsbeispiel vorgesehen, dass in einem oberen und in einem unteren Bereich der Warenschaufläche jeweils eine Seitenkantenmeßeinrichtung angeordnet ist, mit welcher die Lage der Seitenkante in dem oberen und unteren Bereich bestimmt und Zwischenwerte durch Interpolation ermittelt werden können.

Bei den Seitenkantenmeßeinrichtungen sind vielerlei Möglichkeiten denkbar, wie z.B. mechanische Fühler oder ähnliches. Bevorzugterweise handelt es sich jedoch bei den Seitenkantenmeßeinrichtungen um in Y-Richtung ausgerichtete Sensorreihen.

Weitere Merkmale und Vorteile der Erfindung sind Gegenstand der nachfolgenden Beschreibung sowie der zeichnerischen Darstellung einiger Ausführungsbeispiele: In der Zeichnung zeigen:

Fig. 1: Eine perspektivische Darstellung eines ersten Ausführungsbeispiels einer erfindungsgemässen Warenschaumaschine;

Fig. 2: einen Schnitt längs Linie 2-2 in Fig. 1;

Fig. 3: einen Ausschnitt längs Linie 3-3 in Fig. 1;

Fig. 4: einen Ausschnitt längs Linie 4-4 in Fig. 1;

Fig. 5: eine ausschnittweise Darstellung eines zweiten Ausführungsbeispiels der erfindungsgemässen Warenschaumaschine;

Fig. 6: eine schematische Darstellung einer ausgerollten Stoffbahn entsprechend den ersten vier Ausführungsbeispielen des erfindungsgemässen Verfahrens;

Fig. 7: eine vergrösserte Darstellung einer Marke in Fig. 6;

Fig. 8: eine Darstellung ähnlich Fig. 6 entsprechend einem fünften Ausführungsbeispiel des erfindungsgemässen Verfahrens;

Fig. 9: eine schematische Seitenansicht einer Stofflegemaschine;

Fig.10: eine Frontansicht der Stofflegemaschine in Fig. 9 und

Fig.11: eine schematische Darstellung eines Verlaufs einer Stoffbahn in der Legemaschine gem. Fig.9 und 10.

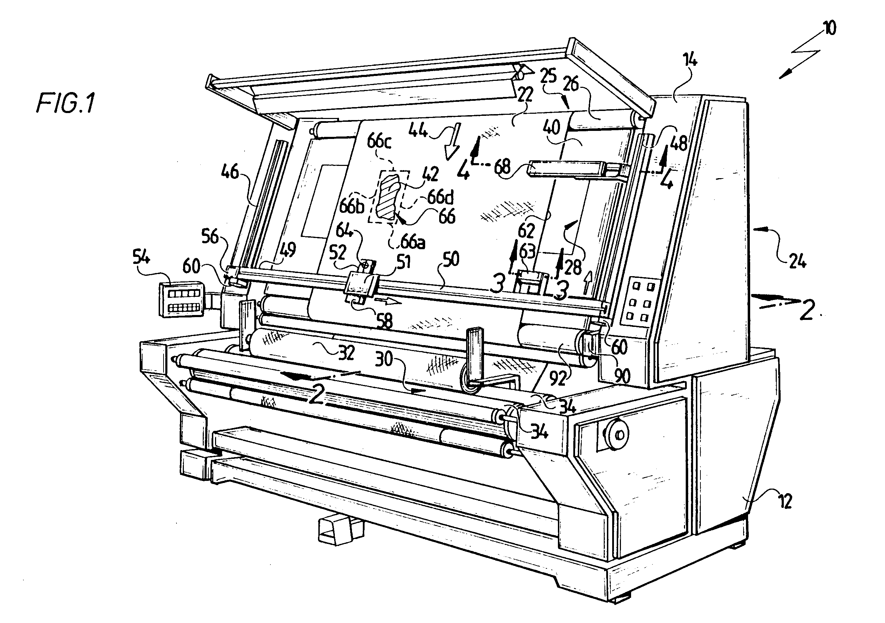

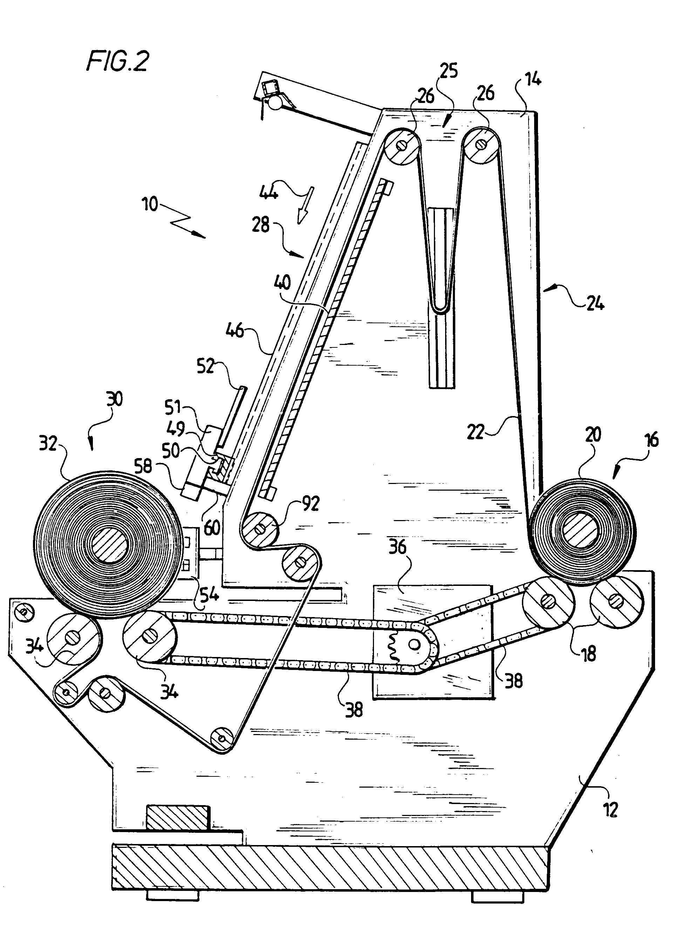

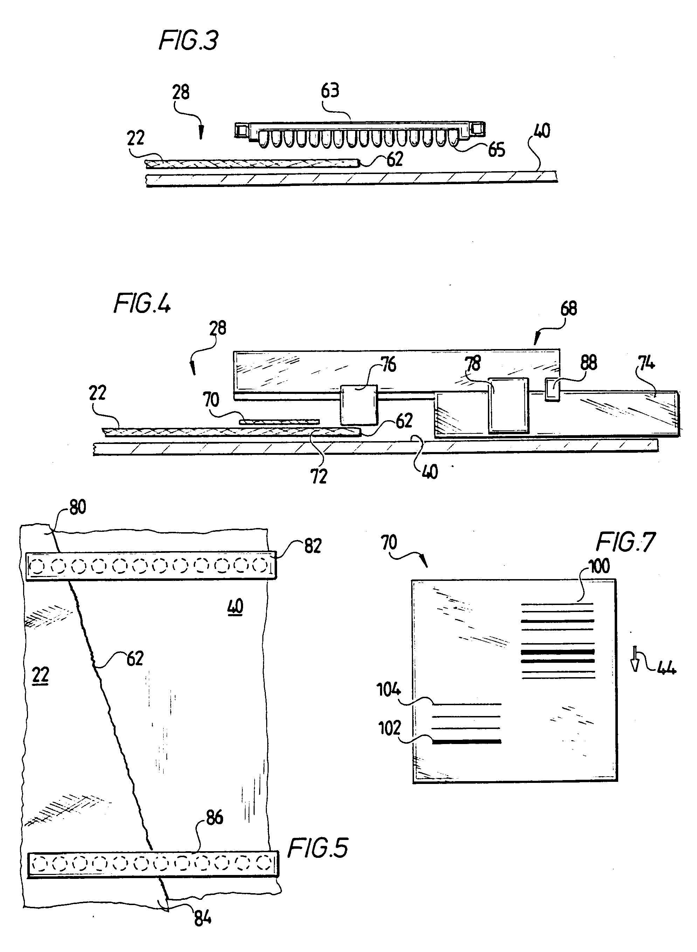

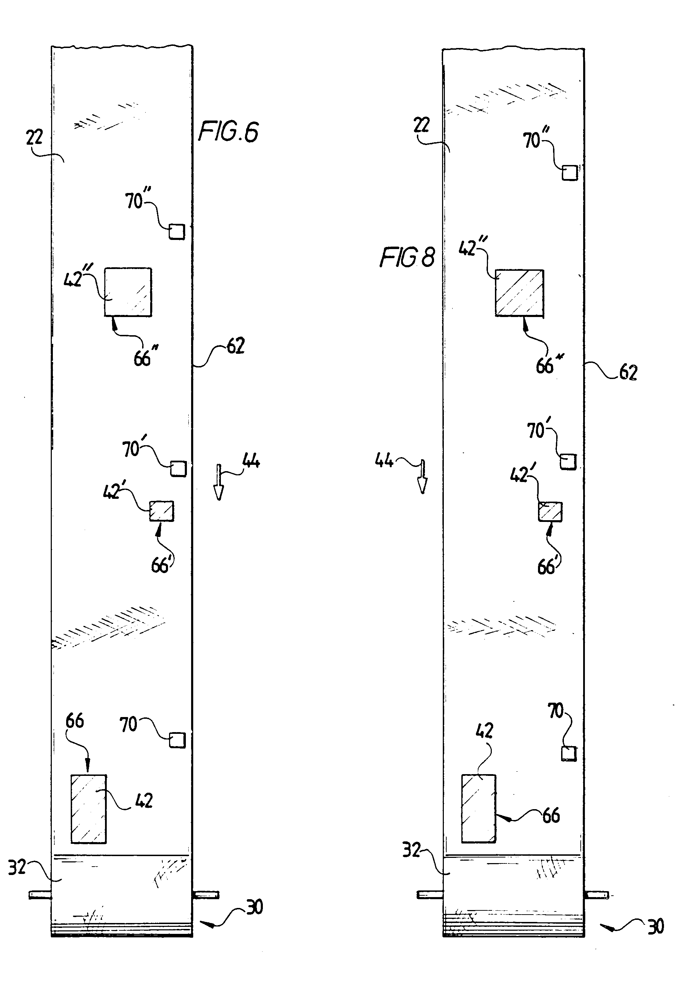

Fig. 1 und 2 zeigen ein als Ganzes mit 10 bezeichnetes erstes Ausführungsbeispiel einer erfindungsgemässen Warenschaumaschine, welche ein Gestell 12 umfasst, von welchem ausgehend sich mittig ein Warenschautisch 14 nach oben erhebt. Auf einer Rückseite 24 des Warenschautisches 14 ist eine Abwickeleinrichtung 16 vorgesehen, welche einen Satz Tragrollen 18 umfasst, auf welchem eine abzuwickelnde Stoffrolle 20 aufliegt.

Von dieser Stoffrolle 20 ist eine Stoffbahn 22 auf der Rückseite 24 des Warenschautisches 14 nach oben und über eine Warenspannungsausgleichseinrichtung 25 mit zwei oberen Umlenkrollen 26 auf einer Vorderseite 28 des Warenschautisches 14 nach unten zu einer Aufwickeleinrichtung 30 gezogen.

Diese Aufwickeleinrichtung 30 umfasst ebenfalls eine Stoffrolle 32, welche ihrerseits auf einem Satz Tragrollen 34 aufsitzt.

Getrieben werden die Abwickeleinrichtung 16 und die Aufwickeleinrichtung 30 von einem Antrieb 36, welcher beispielsweise über Ketten 38 die Tragrollensätze 18 und 34 antreibt.

Auf der Vorderseite 28 des Warenschautisches 14 liegt eine Warenschaufläche 40, auf welcher die Stoffbahn 22 nach Fehlern untersucht wird. Zur Registrierung eines auf dieser Warenschaufläche entdeckten Fehlers 42 ist eine Registriereinrichtung vorgesehen, welche beispielsweise zwei beiderseits der Warenschaufläche 40 angeordnete und sich parallel zu einer Abwickelrichtung 44 erstreckende X-Führungen 46 und 48, eine auf diesen X-Führungen 46 und 48 als X-Schlitten 49 verschiebbare Y-Führung 50 und einen auf dieser Y-Führung 50 quer zur Abwickelrichtung 44 und senkrecht zu den X-Führungen 46 und 48 verschieblichen Y-Schlitten 51 mit einem Markierungselement 52 sowie eine Rechnereinheit 54 mit Wegaufnehmern 56 und 58 umfasst. Dabei dient beispielsweise der Wegaufnehmer 56, gehalten an dem X-Schlitten 49, als X-Wegaufnehmer, welcher die Verschiebungen der Y-Führung 50 in X-Richtung ausgehend von einer durch Anschläge 60 definierten Ausgangsstellung mißt, und der Wegaufnehmer 58, integriert in den Y-Schlitten 51, als Y-Wegaufnehmer, welcher die Stellung des Markierungselements 52 relativ zu einer rechten Seitenkante 62 der Stoffbahn 22 erfasst. Durch die beiden Wegaufnehmer 56 und 58 ist in erfindungsgemässer Weise eine Erfassung des Fehlerbereichs 42 dadurch möglich, dass ein Fadenkreuz 64 des Markierungselements 52 auf einer den Fehlerbereich 42 umgebenden Begrenzungslinie 66 beispielsweise von einer Bedienungsperson umfahren wird.

Zur genauen Erfassung des Y-Wertes, definiert als Abstand von der Seitenkante 62, ist am X-Schlitten, in dem die Seitenkante 62 übergreifenden Bereich und in derselben X-Position wie das Fadenkreuz 64, ein Seitenkantensensor 63 gehalten, welcher beispielsweise, wie in Fig. 3 dargestellt, in Y-Richtung aneinandergereihte Reflexionssensoren 65 umfasst, die ihrerseits auf das unterschiedliche Reflexionsvermögen der Stoffbahn 22 und der Warenschaufläche 40 ansprechen.

An dem Warenschautisch 14 ist ausserdem eine die Seitenkante 62 der Stoffbahn 22 übergreifende Markenklebeeinrichtung 68 vorgesehen, mit welcher - wie in Fig. 4 dargestellt - Marken 70 auf einen Randbereich 72 der Stoffbahn 22 klebbar sind. Erfindungsgemäss ist diese Markenklebeeinrichtung 68 auf einer Führung 74 in Y-Richtung verschieblich gelagert und mit einem Seitenkantendetektor 76 sowie einem Y-Vorschubantrieb 78 versehen, so dass die gesamte Markenklebeeinrichtung zum Aufkleben der Marken 70 auf den Randbereich relativ zur Seitenkante 62 in dieselbe Position bringbar ist und daher unabhängig vom Verlauf der Seitenkante 62 auf der Warenschaufläche 40 die Marken 70 stets im selben Abstand von der Seitenkante 62 plaziert.

Bei einem zweiten Ausführungsbeispiel der Warenschaumaschine ist, um die Lage der Seitenkante 62 der Stoffbahn 22 auf der Warenschaufläche 40 genau zu erfassen, wie aus Fig. 5 erkennbar, anstelle des Seitenkantensensors 63 an einem oberen Ende 80 der Warenschaufläche 40 ein erster Seitenkantensensor 82 und an einem unteren Ende 84 der Warenschaufläche 40 ein zweiter Seitenkantensensor 86 vorgesehen. Der erste Kantensensor 82 und der zweite Kantensensor 86 sind ausserdem noch dazu verwendbar, um eine kantengenaue Zufuhr der Stoffbahn 22 zur Warenschaufläche 40 bzw. zur Aufwickeleinrichtung 30 zu ermöglichen, wozu die Warenspannungsausgleichseinrichtung25 bzw. die Aufwickeleinrichtung 30 quer zur Abwickelrichtung 44 verschiebbar auszubilden sind. Damit ist ferner ein exakter Kantenaufbau der Stoffrolle 32 erreichbar.

Ein drittes Ausführungsbeispiel der erfindungsgemässen Warenschaumaschine geht aus von einem Aufbau gemäss dem zweiten Ausführungsbeispiel, allerdings ist der erste Seitenkantensensor 82 durch einen in der Führung 74 der Markenklebeeinrichtung eingebauten Wegmesser 88 -zusätzlich in Fig. 4 eingezeichnet - ersetzt, welcher jeweils den Weg mißt, um den die ebenfalls nahe des oberen Endes 80 der Warenschaufläche angeordnete Markenklebeeinrichtung 68 in Richtung auf die Seitenkante 62 verschoben wird, so dass der Verlauf der Seitenkante 62 aus diesem Weg in Verbindung mit dem unteren Seitenkantensensor ermittelt werden kann.

Bei einem vierten Ausführungsbeispiel der Warenschaumaschine 10 ist die Y-Führung 51 unverschieblich an dem Gestell 12 gehalten. Eine Relativverschiebung zwischen der Stoffbahn 22 und dem Markierungselement 52 in X-Richtung ist dadurch erreichbar, dass die Stoffbahn auf der Warenschaufläche 40 in Abwickelrichtung 44 und entgegengesetzt dazu durch den Antrieb 36 langsam zum Aufnehmen der Begrenzungslinie 66 verfahrbar ist. Als X-Wegaufnehmer kommt dann ein in Fig. 1 dargestellter Stoffbahnlängenmesser 90, beispielsweise verbunden mit einer am unteren Ende der Warenschaufläche 40 angeordneten unteren Umlenkrolle 92, zum Einsatz.

Der Stoffbahnlängenmesser 90 kann auch bei dem ersten Ausführungsbeispiel dazu verwendet werden, die Länge der Stoffbahn 22 von deren Anfang ausgehend zu messen und zu jeder Marke 70 nach deren Lage relativ zum Anfang der Stoffbahn 22 in dem Datenspeicher des Rechners 54 abzulegen. Diese absolute Lage der Marken 70 ist zwar beim späteren Legen der Stoffbahn 22 nicht exakt reproduzierbar, da sich die Stoffbahn 22 in ihrer Längsrichtung unterschiedlich zieht, die Information über die Lage der Marken 70 kann jedoch bei einer besonderen Art der Steuerung einer Legemaschine, wie dies im folgenden noch näher erläutert werden wird, von Vorteil sein.

Ein erstes Ausführungsbeispiel des erfindungsgemässen Verfahrens, illustriert in Fig. 6, funktioniert folgendermassen:
Die über die Warenschaufläche 40 gezogene Stoffbahn 22 wird entweder von einer Bedienungsperson oder automatisch inspiziert. Stellt die Bedienungsperson oder die Automatik einen Fehler 42 fest, so wird das Abwickeln der Stoffbahn 22 gestoppt.

Der Stop erfolgt zweckmässigerweise dann, wenn bei in ihrer unteren Anschlagstellung stehender Y-Führung 50 die untere Begrenzungslinie 66a des Fehlerbereichs 42 nahe dem Fadenkreuz 64 des Markierungselements 52 zu liegen kommt.

Das Anhalten der Abwickelbewegung ist gleichzeitig für die Rechnereinheit 54 der Startbefehl, um zunächst mit der Markenklebeeinrichtung 68 die Marke 70 auf den Randbereich 72 der Stoffbahn 22 aufzukleben. Gleichzeitig beginnt die Bedienungsperson oder gegebenenfalls auch eine entsprechende Automatik mit dem Fadenkreuz 64 des Markierungselements 52 den Fehlerbereich 42 längs der Begrenzungslinie 66, mit den Abschnitten 66a, 66b, 66c und 66d zu umfahren. Die hierbei durchlaufenden Wegstrecken werden sowohl von dem X-Wegaufnehmer 56 als auch von dem Y-Wegaufnehmer 58 gemessen und in Form einer Punktschar mit entsprechenden X/Y Wertepaaren der Rechnereinheit 54 übermittelt, die diese dann gemeinsam mit der Tatsache, dass auf der Stoffbahn 22 die erste Marke 70 gesetzt wurde, in ihrem Datenspeicher ablegt, wobei automatisch der Abstand der Markenklebeeinrichtung 68 von der Ausgangsstellung der Y-Führung 50 berücksichtigt wird. Somit sind nun im Datenspeicher der ersten Marke 70 sämtliche, die Begrenzungslinie 66 in Relation zur Marke 70 festlegenden Punkte in Form von X/Y-Wertepaaren abgelegt.

Nach Beendigung des Umfahrens der Begrenzungslinien 66 wird die Warenschau fortgesetzt, d.h. die Stoffbahn 22 wird weiter in Abwickelrichtung 44 über die Warenschaufläche 40 gezogen.

Tritt nun ein weiterer Fehler 42' auf, so wird jetzt eine zweite Marke 70' gesetzt, und in Abhängigkeit von dieser zweiten Marke werden sämtliche Daten der zu dem zweiten Fehlerbereich 42' gehörenden Begrenzungslinie 66' in gleicher Weise wie bereits beschrieben abgelegt.

Dasselbe Verfahren wird bei Auftreten eines dritten Fehlers 42'' durchgeführt, so dass nach Abwickeln der Stoffrolle 2o die Stoffrolle 32 eine Reihe von Marken 70, 70', 70'' usw., bezeichnet durch ihre Reihenfolge auf der Stoffbahn 22 als erste, zweite und dritte Marke, trägt, zu denen jeweils die Daten der Begrenzungslinien 66, 66', 66'' usw. in dem Datenspeicher der Rechnereinheit 54 abgelegt sind.

Das zweite Ausführungsbeispiel des erfindungsgemässen Verfahrens entspricht dem ersten Ausführungsbeispiel insoweit, als zu den jeweiligen Marken 70, 70', 70'' usw. die jeweiligen Begrenzungslinien 66, 66', 66'' usw. in der Rechnereinheit 54 gespeichert werden. Es unterscheidet sich vom ersten Ausführungsbeispiel lediglich dadurch, dass zusätzlich zu der Reihenfolge der Marken 70; 70', 70'' noch deren ungefähre absolute Lage in dem Datenspeicher der Rechnereinheit 54 mitgespeichert wird.

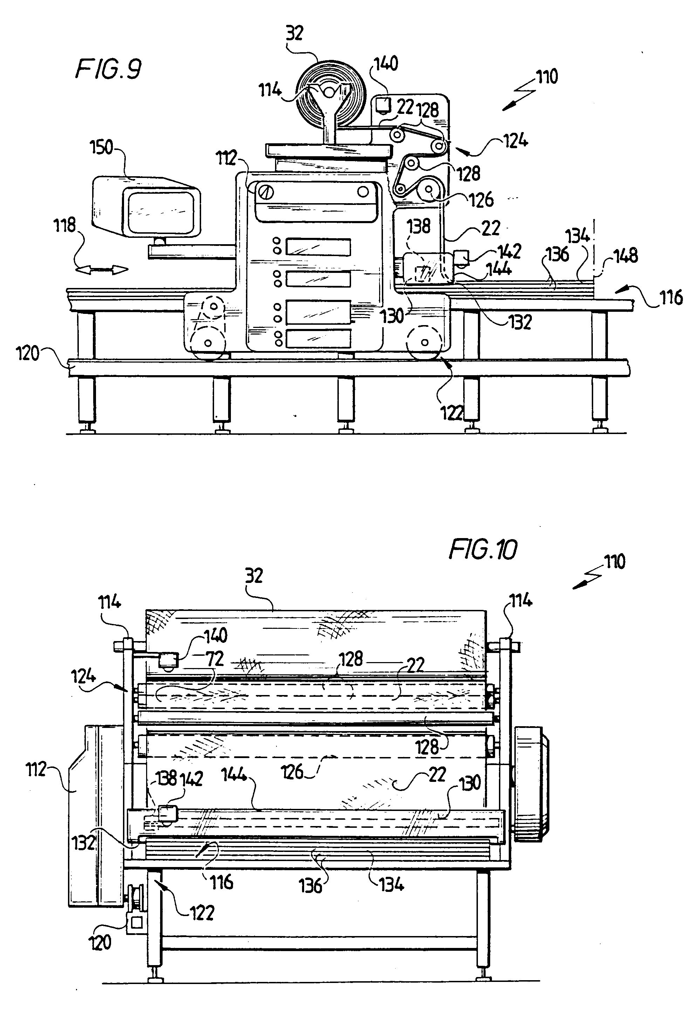

Bei einem dritten Ausführungsbeispiel des erfindungsgemässen Verfahrens werden die Marken 70, 70', 70'' - wie in Fig. 7 dargestellt - zur Bezeichnung mit einem zusätzlichen Erkennungscode 100 versehen, was das Erkennen der Reihenfolge der Marken 70, 70', 70'' erleichtert und ausserdem beim Legen dann, wenn beispielsweise eine der Marken abgefallen und verloren gegangen ist, eine falsche Anzeige von Begrenzungslinien 66, 66', 66'' usw. vermeiden hilft. Dieser Erkennungscode wird erfindungsgemäss von der Markenklebeeinrichtung 68 beim jeweiligen Aufkleben der Marken 70, 70', 70'' usw. auf diese aufgedruckt, wobei es sich im einfachsten Fall um einen Balkencode handelt.

Ferner können die Marken 70, 70', 70'' usw. ausserdem noch mit einem Bezugspunkt versehen sein, welcher insgesamt eine höhere Ortsauflösung des erfindungsgemässen Verfahrens dadurch erlaubt, dass nicht die Marken 70, 70', 70'' als Ganzes sowohl beim Registrieren der dazugehörigen Begrenzungslinien 66, 66', 66'' usw. einen Bezugspunkt darstellen und damit die Ortsauflösung in der Grössenordnung der Grösse der Marken 70, 70',

70″ usw. selbst liegt, sondern dass die Marken 70, 70′, 70″ zusätzlich noch einen auf diese aufgebrachten Bezugspunkt zeigen. Dieser kann, wenn es sich lediglich wie bei den vorhergehenden Ausführungsbeispielen um einen Bezugspunkt in X-Richtung handelt, durch einen optisch erkennbaren Balken 102 definiert sein, der Bezugspunkt kann aber auch lediglich ein optisch erkennbarer Punkt sein, so dass er sowohl als Bezugspunkt in X-Richtung als auch in Y-Richtung dienen kann. Ferner hat es sich, um den Bezugspunkt eindeutig identifizieren zu können, als zweckmässig erwiesen, wenn diesem ein Identifizierungscode 104 beispielsweise in Form von drei Balken in gleichem Abstand vorangestellt ist, wodurch beispielsweise beim späteren Detektieren der Marke eine Verwechslung mit dem Erkennungscode 100 vermieden werden kann.

Sowohl der Erkennungscode 100 als auch der Identifizierungscode 104 sind vorteilhafterweise in X-Richtung lesbar, also in Y-Richtung verlaufende Balken, wobei dessen Anfang entgegengesetzt zur Abwickelrichtung 44 angeordnet ist, so dass ein Umwickeln zum Legen vermieden werden kann.

Ein viertes Ausführungsbeispiel des erfindungsgemässen Verfahrens unterscheidet sich lediglich hinsichtlich der Aufnahme der Erstreckung der Begrenzungslinie 66 in X-Richtung durch den Stoffbahnlängenmesser 90 anstelle des X-Wegaufnehmers 56 von den bisher beschriebenen Verfahren. Ansonsten sind alle bisher beschriebenen Verfahren mit dem vierten Ausführungsbeispiel identisch durchführbar.

Bei einem fünften Ausführungsbeispiel des erfindungsgemässen Verfahrens - skizziert in Fig. 8 - werden in Abwandlung zu allen bisher beschriebenen Ausführungsbeispielen die Marken 70, 70′, 70″ usw. nicht nur dann gesetzt, wenn die Stoffbahn 22 zur Erfassung der Begrenzungslinie 66a durch das Fadenkreuz 64 angehalten wird, sondern es werden während des gesamten Abwickelns der Stoffbahn in Abwickelrichtung 44 in jeweils konstanten Abständen, gesteuert durch den Stoffbahnlängenmesser 90, Marken 70, 70′, 70″ auf den Randbereich 72 der Stoffbahn 22 aufgeklebt.

Die Rechnereinheit 54 hat somit in ihrem Datenspeicher beim Anhalten der Stoffbahn 22 zum Erfassen der unteren Begrenzungslinie 66a durch das Fadenkreuz 64 nicht wie bisher eine Marke 70 auf die Stoffbahn 22 aufzukleben, sondern den Abstand zwischen der bereits aufgeklebten oder der als nächstes aufzuklebenden Marke und der Begrenzungslinie 66a in X-Richtung, gemessen von dem Stoffbahnlängenmesser 90 in dem Datenspeicher abzulegen.

Im Anschluss daran erfolgt die Erfassung der Begrenzungslinie 66 genau wie bei den vorhergehenden Ausführungsbeispielen, so dass sich an den bereits abgelegten X-Wert dann die X/Y-Wertepaare der Begrenzungslinie 66 des jeweiligen Fehlers 42 anschliessen.

Bei den bisher beschriebenen fünf Ausführungsbeispielen des erfindungsgemässen Verfahrens wurde nicht näher auf die Bestimmung des jeweiligen Y-Wertes bei der Ermittlung der X/Y-Wertepaare der die Begrenzungslinie 66 definierenden Punktschar eingegangen.

Bei einer ersten Variante der vorstehend beschriebenen Ausführungsbeispiele erfolgt die Ermittlung des Y-Wertes über den Y-Wegaufnehmer 58 und den Seitenkantensensor 63. Der Seitenkantensensor 63 ermittelt die genaue Lage der Seitenkante 62 auf der Stoffbahn, so dass dann ausgehend von diesem Wert mittels des Y-Wegaufnehmers 58 der wahre Y-Wert ermittelt werden kann. Bei diesem Verfahren ist es somit völlig gleichgültig, ob die Stoffbahn 22 gerade oder schräg über die Warenschaufläche 40 gezogen wird.

Ein anderes Verfahren, dargestellt in Fig. 5, misst über den ersten Seitenkantensensor 82 und den zweiten Seitenkantensensor 86 am oberen bzw. unteren Ende der Warenschaufläche 40 die Lage der Seitenkante 62. Die jeweilige Lage der Seitenkante 62 zu jedem zwischen dem ersten Seitenkantensensor 82 und dem zweiten Seitenkantensensor 86 wird durch ein Interpolationsverfahren ermittelt, welches eine Gerade durch die mit dem ersten und zweiten Seitenkantensensor 82, 86 gemessene Seitenkantenlage hindurch legt. Damit kann nun zu jedem vom Markierungselement 52 angefahrenen X-Wert auf der Begrenzungslinie 66 eine diesem entsprechende Lage der Seitenkante 62 zwischen dem ersten und zweiten Seitenkantensensor 82 bzw. 86 durch das Interpolationsprogramm ermittelt werden, und ausgehend von dieser ermittelten Lage der Seitenkante wird nun unter Heranziehung des vom Y-Wegaufnehmer 58 festgestellten Wertes der jeweilige Y-Wert errechnet.

Die Heranziehung der Tatsache, dass die Markenklebeeinrichtung 68 kantengesteuert in Richtung auf die Stoffbahn 22 verschiebbar ist und diese Verschiebung durch den Wegmesser 88 erfassbar ist, erlaubt es,das vorstehend beschriebene Interpolationsverfahren auch dann durchzuführen, wenn der erste Seitenkantensensor 82 fehlt. Die von diesem zu ermittelnde Lage der Seitenkante wird durch den vom Wegmesser 88 ermittelten Weg ersetzt, so dass das Interpolationsverfahren in der vorstehend beschriebenen Weise durchgeführt werden kann.

Eine weitere Variante eines Verfahrens zur exakten Festlegung des Y-Werts sieht vor, dass die Stoffbahn 22 der Warenschaufläche 40 kantengesteuert zuführbar ist, wofür die Warenspannungsausgleichseinrichtung 25 quer zur Abwickelrichtung 44 verschiebbar ist. Im Falle einer derartigen kantengesteuerten Zuführung der Stoffbahn 22 ist ein schräger Verlauf der Stoffbahn 22 auf der Warenschaufläche 40 ausgeschlossen, so dass als Nullpunkt für die Bestimmung des jeweiligen Y-Wertes die Lage der Seitenkante 62, in welcher diese der Warenschaufläche 40 zugeführt wird, herangezogen werden kann.

Nach der Durchführung des erfindungsgemässen Warenschauverfahrens auf einer erfindungsgemässen Warenschaumaschine ist eine Stoffrolle 32 vorhanden, deren Stoffbahn 22, wie in den Fig. 6 und 8 aufgerollt dargestellt die im Bereich ihrer Fehler 42, 42′, 42″ usw. aufgeklebten Marken 70, 70′, 70″ usw. trägt. Ausserdem sind in dem Datenspeicher des Rechners 54 unter der Bezeichnung der jeweiligen Marken 70, 70′, 70″ die X/Y-Wertepaare der die Begrenzungslinie 66 definierenden Punktschar abgelegt.

Zum Legen einer derartigen Stoffrolle 32 sind somit sämtliche in dem Datenspeicher des Rechners 54 enthaltenen Daten auf ein mit 112 bezeichnetes Rechnersystem einer als Ganzes mit 110 bezeichneten Legemaschine - dargestellt in den Fig. 9 und 10 - zu überspielen. Ausserdem ist die Stoffrolle 32 in eine hierfür vorgesehene Aufnahme 114 der Legemaschine 110 einzusetzen.

Die Legemaschine 110 umfasst ein an einem Legetisch 116 in horizontaler Richtung längs eines Pfeils 118 mittels eines zeichnerisch nicht dargestellten Motors auf Schienen 120 verfahrbares Legemaschinengestell 122.

Dieses Legemaschinengestell 122 trägt auf seiner Oberseite die bereits beschriebene Aufnahme 114 für die Stoffrolle 32 sowie eine als Ganzes mit 124 bezeichnete und unterhalb der Aufnahme 114 angeordnete Stoffvorgabe. Diese Stoffvorgabe umfasst mehrere, die von der Stoffrolle 32 abgewickelte Stoffbahn 22 zu einer Vorgabewalze 126 führende Umlenkwalzen 128, welche ein zugfreies Abwickeln der Stoffbahn 22 von der Stoffrolle 32 gewährleisten.

Von der Vorgabewalze 126 fällt die Stoffbahn 22 in ein höhenverstellbar am Legewagengestell 122 gehaltenes Legeaggregat 130, welches mit einer vorderen Auslegekante 132 die Stoffbahn 22 auf dem Legetisch 116 zu einem Lagenpaket 134 auslegt. Da das Lagenpaket 134 aus exakt übereinanderliegenden Einzellagen 136 aufgebaut sein soll und zur Fehlerbehandlung ebenfalls ein Abschneiden der Stoffbahn 22 erforderlich ist, ist außerdem in dem Legeaggregat 130 noch eine Abschneideeinrichtung 138 integriert.

Unmittelbar nach der Stoffrolle 32 ist ein die zu den Umlenkwalzen geführte Stoffbahn 22 in dem Randbereich 72 übergreifender erster Detektor 140 vorgesehen, welcher zum Erkennen und ggf. zum Lesen von den auf der Stoffbahn aufgebrachten Marken 70 dient. Ferner ist am Legeaggregat 130 ein zweiter Detektor 142 auf dessen vom Legewagengestell 122 wegweisender Frontfläche 144 gehalten, welcher zum Nachweis vcn unmittelbar nach der Auslegekante 132 in der obersten Lage 136 ausgelegten Marken 70 vorgesehen ist.

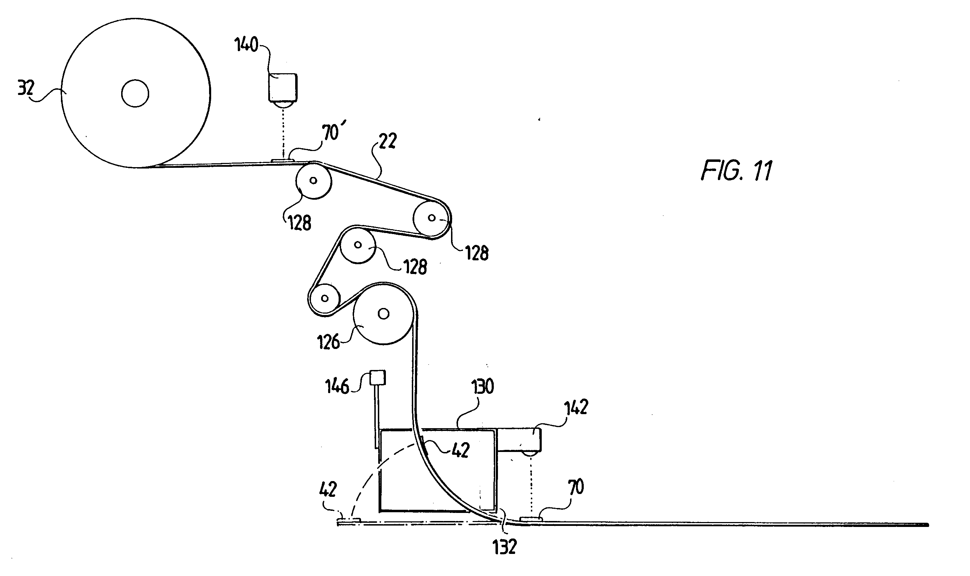

Die Anordnung der Detektoren 140 und 142 ist in Fig. 11 in Bezug auf die durch die Legemaschine geführte Stoffbahn 22 nochmals vergrössert skizziert.

In Abwandlung des beschriebenen ersten Ausführungsbeispiels der Legemaschine kann bei einem zweiten Ausführungsbeispiel der zweite Detektor 142 entfallen. In diesem Fall ist allerdings sicherzustellen, dass ein Weg der Stoffbahn vom ersten Detektor 140 bis zur Auslegekante 132 für das Rechnersystem 112 definiert erfassbar ist, insbesondere bei einer Höhenverstellung des Legeaggregats 130 beim Auslegen des Lagenpakets 134. D.h., dass beispielsweise der Weg der Stoffbahn 22 vom ersten Detektor 140 bis zur Auslegekante 132 unabhängig von der Höhenverstellung des Legeaggregats 130 konstant gehalten wird, wozu bei einer Höhenverstellung des Legeaggregats 130 die Umlenkwalzen 128 entsprechend der Höhenverstellung des Legeaggregats 130 derart verstellbar auszubilden sind, dass eine Änderung eines Abstandes zwischen der Vorgabewalze 126 und der Auslegekante 132 durch eine Änderung eines Abstandes zwischen den Umlenkwalzen 128 kompensiert wird. Es ist aber auch möglich, die Umlenkwalzen 128 konstant stehen zu lassen und die Änderung des Abstandes zwischen der Vorgabewalze 126 und der Auslegekante 132 dadurch zu erfassen, dass dem höhenverstellbaren Legeaggregat 130 ein Wegmesser 146 zugeordnet ist, welcher die Abstandsänderungen erfasst und dem Rechnersystem 112 übermittelt.

Ein erstes Ausführungsbeispiel des Legeverfahrens arbeitet folgendermassen:
Beim Abrollen der Stoffbahn 22 von der Stoffrolle 23 werden die Marken 70, 70′,70″ usw., wie aus den Fig. 6 und 8 zu entnehmen ist, nun in umgekehrter Reihenfolge den Detektor 140 passieren. D.h. die letzte auf die Stoffbahn aufgebrachte Marke wird nunmehr die erste sein.

Das Rechnersystem 112 hat dies bei der Zuordnung der X/Y-Wertepaare der die Begrenzungslinie 66 definierenden Punktschar zu berücksichtigen.

Passiert beispielsweise die Marke 70″ den ersten Detektor 140, so übermittelt dieser das Signal, dass eine Marke nachgewiesen ist, dem Rechnersystem 112. Dieses ermittelt nun unter Berücksichtigung der bereits vom Detektor 140 nachgewiesenen Marken, um die wievielte Marke es sich handelt und greift auf den unter der Reihenfolge dieser Marke abgelegten Satz von X/Y-Wertepaaren der Punktschar im Datenspeicher zu.

Ausserdem leitet der Rechner einen Bremsvorgang ein, bei welchem die Legegeschwindigkeit und somit auch die Geschwindigkeit der Stoffbahn 22 beim Durchlaufen der Legemaschine 110 reduziert wird. Da der ungefähre Abstand zwischen dem ersten Detektor 140 und der Auslegekante 132 bekannt ist, kann der Bremsvorgang beispielsweise durch eine bereits festliegende Bremsroutine derart gesteuert werden, dass dann, wenn die Marke 70″ nach durchlaufen der Legemaschine 110 die Auslegekante 32 passiert sich die Legegeschwindigkeit dem Wert 0 nähert.

Sobald die Marke 70″ die Auslegekante 132 passiert hat, wird sie vom zweiten Detektor 142 erkannt, so dass in diesem Moment die genaue X-Position der Marke 70″ in Bezug auf einen Anfang 148 der obersten Lage 136 des Lagenstapels 134 vom Rechnersystem 112 ermittelt werden kann. Nach Ermittlung dieser X-Position wird unter Heranziehung der X/Y-Wertepaare der zu dieser Marke 70″ gehörenden Punktschar die genaue Lage der Begrenzungslinie 66″ auf der obersten Lage 136 ermittelt und mit dem ebenfalls im Rechnersystem 112 bereits abgespeicherten Schnittbild verglichen. Dieser Schnittbildvergleich kann beispielsweise auf einem Terminal 150 dargestellt werden. Es ist aber ebenfalls möglich, dass dieser Schnittbildvergleich lediglich intern ohne Anzeige für die Bedienungsperson rechnerisch durchgeführt wird.

In Abhängigkeit von dem Resultat dieses Schnittbildvergleichs, d.h. davon, ob die Begrenzungslinie 66″ eines oder mehrere der auszuschneidenden Teile des Schnittbildes tangiert, kann nun entweder eine Bedienungsperson bei Betrachtung des Terminals 150 oder das Rechnersystem 112 selbständig ermitteln, bis zu welcher Stelle weitergelegt, die Stoffbahn mit der Abschneidevorrichtung 138 abgeschnitten und an welcher Stelle die Stoffbahn neu angelegt wird. Eine Möglichkeit zur Ermittlung einer Stop- und Abschneide-, sowie einer Neuanlegelinie ist in der deutschen Patentanmeldung P 37 13 010.2 dargestellt, auf welche diesbezüglich vollinhaltlich Bezug genommen wird.

Bei diesem Ausführungsbeispiel ist zu erkennen, dass es vorteilhaft ist, in die jeweilige Marke 70 bei der Warenschau in einer Richtung entgegengesetzt zur Abwickelrichtung 44 bei der Warenschau im Abstand von der Begrenzungslinie 66 plaziert wird. Durch diesen Abstand zwischen der jeweiligen Marke 70 und der Begrenzungslinie 66 liegt dann, wenn die Marke 70 vom zweiten Detektor 142 detektiert wird, der Fehler noch nicht in der obersten ausgelegten Lage 136, sondern befindet sich noch in dem durch die Legemaschine 110 geführten Stück der Stoffbahn 22, so dass die Bedienungsperson oder das Rechnersystem 112 noch rechtzeitig eine Entscheidung hinsichtlich der weiteren Vorgehensweise treffen kann, ohne dass ggf. mit der gesamten Legemaschine 110 entgegengesetzt zur Legerichtung zurückgefahren und der bereits ausgelegte Teil der Stoffbahn 22 wieder abgehoben und in die Legemaschine 110 zurückgewickelt werden muss.

Bei einem zweiten verbesserten Ausführungsbeispiel des Legeverfahrens kommt der Erkennungscode 100 auf der Marke 70 zum Einsatz. Hierbei dient der Detektor 140 nicht nur zum Erkennen der Tatsache, dass beispielsweise die Marke 70 diesen passiert hat, sondern auch zum gleichzeitigen Ablesen des Erkennungscodes 100.

Dadurch wird das Rechnersystem 112 mit Sicherheit in die Lage versetzt, die dieser Marke 70 entsprechenden X/Y-Wertepaare der die Begrenzungslinie 66 definierten Punktschar aufzufinden. Dies ist insbesondere dann von Vorteil, wenn sich eine der Marke 70, 70′, 70″ usw. vor deren Detektieren mittels des ersten Detektors 140 gelöst hat. In diesem Fall wird zwar der der gelösten Marke entsprechende Fehler nicht erkannt und beim Legen nicht berücksichtigt. Es ist jedoch sichergestellt, dass den darauffolgenden Marken die richtigen Fehler mit den richtigen Begrenzungslinien wieder zugeordnet werden, während dies bei einem fehlenden Erkennungscode nicht der Fall ist.

Ein drittes Ausführungsbeispiel des Legeverfahrens sieht vor, dass der zweite Detektor 142 nicht nur die Tatsache des Auslegens der Marke 70 detektiert, sondern auf dieser Marke zunächst nochmals über ein Lesen des Identifizierungscodes 104 feststellt, dass der richtige Bereich der Marke 70 gelesen wird und der dann bei Erscheinen des durch den Balken 102 definierten Bezugspunktes exakt den diesem Bezugspunkt entsprechenden X-Wert vom Anfang 148 der oberen Lage 136 ermittelt. Das weitere Verfahren läuft analog zum ersten Ausführungsbeispiel ab.

Bei einem vierten Ausführungsbeispiel des Verfahrens kann auf den zweiten Detektor 142 verzichtet werden. In diesem Fall dient der erste Detektor 140 sowohl zum Erkennen der Marke 70 als solche und somit zum Einleiten des Bremsvorgangs, desgleichen ist der erste Detektor 140 in der Lage, ggf. den Erkennungscode 100 abzulesen und schliesslich ist der erste Detektor 140 noch in der Lage, beispielsweise in Bezug auf den letzten Balken des Erkennungscodes 100 die spätere X-Position dieser Marke 70 auf der ausgelegten obersten Lage 136 zusammen mit dem Rechnersystem 112 dadurch zu ermitteln, dass zu der Position dieser Marke 70 oder des letzten Balkens des Erkennungscodes 100 die Distanz zwischen der Position des ersten Detektors 140 und der Auslegekante 132, die bei diesem Verfahren für das Rechnersystem erfassbar sein muss, hinzuaddiert wird. Um diese hinzuaddierte Distanz wird der Legevorgang fortgesetzt. Gleichzeitig erfolgt das Auslesen der X/Y-Wertepaare der dieser Marke entsprechenden, die Begrenzungslinie 66 dieser Marke definierenden Punktschar und der Schnittbildvergleich, so dass dann, wenn - wie rechnerisch ermittelt - die Marke 70 die Auslegekante 32 passiert hat, entweder der Legevorgang gestoppt wird, um der Bedienungsperson mittels des Terminals 150 Zeit zum Treffen der richtigen Entscheidung zu geben, oder bei rechnerischem Schnittbildvergleich,unter Zugrundelegung der vom Rechnersystem 112 bereits getroffenen Entscheidung hinsichtlich der weiteren Vorgehensweise,der Legevorgang fortgeführt wird.

Schließlich ist noch zu erwähnen, daß dann, wenn bei der Warenschau die Marken 70, 70′, 70″ usw. in gleichen Abständen gesetzt und die X/Y-Wertepaare der die Begrenzungslinie 66 definierenden Punktschar auf die bereits gesetzte Marke bezogen werden, beim Legen eine Umrechnung der X-Werte erforderlich ist, da die X-Werte der nach einer detektierten Marke 70″ folgenden Begrenzungslinie 66′ auf die auf diese detektierte Marke 70″ folgende Marke 70′ bezogen sind. Die Umrechnung ist dadurch möglich, daß der Abstand zwischen den bereits detektierten Marken 70‴,70″ beim Legen gemessen werden kann und dieser Abstand dann zu den X-Werten der auf die detektierte Marke 70″ folgenden Marke 70′ abgelegten Werten hinzuaddiert wird.

Wenn die Marken 70, 70′, 70″ usw. bei der Warenschau in kontanten Abständen gesetzt werden, so gibt dies beim Legen - insbesondere bei verzugsempfindlichen Stoffen - die Möglichkeit,den Verzug beim Legen relativ zu dem bei der Warenschau durch die Messung der Abstände der Marken 70″, 70′, 70 festzustellen und gegebenenfalls durch Steuerung der Stoffvorgabe 124 über das Rechnersystem 112 zu regeln. Ferner besteht auch noch zusätzlich die Möglichkeit, die X-Werte der Begrenzungslinie entsprechend dem gemessenen Verzug zu korrigieren.

**Patentansprüche**

1. Verfahren zum Erfassen eines Fehlers (42) in einer Stoffbahn (22) im Rahmen einer Fehlerschau, bei welchem der Fehler (42) dadurch registriert wird, dass dessen Position in X-Richtung durch eine auf der Stoffbahn gesetzte Marke (70) und mindestens eine weitere Positionsangabe zusammen mit einer Bezeichnung der Marke (70) festgehalten wird, **dadurch gekennzeichnet**, dass als weitere Positionsangaben X- und Y-Werte einer eine Begrenzungslinie (66) um den Fehler (42) festlegenden Punktschar ermittelt und abgespeichert werden und dass für deren X- und Y-Werte die Marke (70) bzw. eine Seitenkante (62) der Stoffbahn (22) als Bezugspunkt dienen.

2. Verfahren nach Anspruch 1, dadurch gekennzeichnet, dass die Marke (70) auf einen Randbereich (72) der Stoffbahn (22) gesetzt wird.

3. Verfahren nach Anspruch 1 oder 2, dadurch gekennzeichnet, dass die Marke (70) gegenüber der Begrenzungslinie (66) in X-Richtung im Abstand angeordnet wird.

4. Verfahren nach einem der voranstehenden Ansprüche, dadurch gekennzeichnet, daß die Marke (70) bei der Warenschau in Wickelrichtung (44) gesehen hinter der Begrenzungslinie (66) angeordnet wird.

5. Verfahren nach einem der voranstehenden Ansprüche, dadurch gekennzeichnet, dass die Bezeichnung der Marken (70) entsprechend ihrer Reihenfolge erfolgt.

6. Verfahren nach einem der voranstehenden Ansprüche, dadurch gekennzeichnet, dass die Marken (70) zur Bezeichnung mit einem maschinenlesbaren Erkennungscode (100) versehen werden.

7. Verfahren nach einem der voranstehenden Ansprüche, dadurch gekennzeichnet, dass die Daten der Begrenzungslinie (66) auf der Marke (70) maschinenlesbar vermerkt werden.

8. Verfahren nach einem der voranstehenden Ansprüche, dadurch gekennzeichnet, dass der Bezugspunkt (102) auf der Marke (70) maschinenlesbar aufgebracht wird.

9. Verfahren nach einem der voranstehenden Ansprüche, dadurch gekennzeichnet, dass zu jeder Messung eines der Y-Werte unter Konstanthaltung des X-Werts die Lage der Seitenkante (62) ermittelt und ausgehend von dieser der Y-Wert bestimmt wird.

10. Verfahren nach Anspruch 9, dadurch gekennzeichnet, dass die Lage der Seitenkante (62) in Wickelrichtung (44) gesehen vor und hinter einem Warenschaubereich festgestellt wird und dass die dem jeweiligen X-Wert entsprechende Lage der Seitenkante (62) durch Interpolation ermittelt wird.

11. Verfahren nach einem der voranstehenden Ansprüche, dadurch gekennzeichnet, dass eine ungefähre X-Position der Marke (70) im Abstand von einem Anfang der Stoffbahn erfasst und abgespeichert wird.

**12.** Warenschaumaschine zum Erfassen von Fehlern auf einer Stoffbahn, insbesondere zur Durchführung des Verfahrens nach einem der Ansprüche 1 bis 11, mit einer Warenschaufläche (40), mit einer Abwickeleinrichtung (16), mit einer Aufwickeleinrichtung (30) und mit einer Registriereinrichtung für den Fehler, welche eine Rechnereinheit (54) mit einem Datenspeicher sowie einer Eingabeeinrichtung für eine Bezeichnung von auf der Stoffbahn (22) zur Kennzeichnung einer X-Position der Fehler (42) gesetzten Marken (70) und für mindestens eine weitere Positionsangabe aufweist, dadurch gekennzeichnet, dass die Registriereinrichtung eine Markensetzeinrichtung (68) sowie ein in X- und Y-Richtung relativ zu der Stoffbahn (22) verfahrbares Markierungselement (52) zum Erfassen einer eine Begrenzungslinie (66) des Fehlers (42) festlegenden Punktschar umfasst, dass die mit dem Markierungselement (52) angefahrenen X- und Y-Werte der Punktschar durch Wegaufnehmer (56, 58, 90) in Abhängigkeit von einem durch die Marke (70) definierten Bezugspunkt bzw. einer Seitenkante (62) der Stoffbahn (22) erfassbar und auf die Eingabeeinrichtung übertragbar sind und dass die Rechnereinheit (54) so aufgebaut ist, dass sie der Bezeichnung der Marken (70) als weitere Positionsangaben die X- und Y-Werte der Punktschar der Begrenzungslinie (66) zuordnet und abspeichert.

**13.** Warenschaumaschine nach Anspruch 12, dadurch gekennzeichnet, das die Stoffbahn (22) von einer Markenpositionierstellung aus in X-Richtung hin- und herverfahrbar ist und dass der eine X-Wegaufnehmer (90) die Bewegungen der Stoffbahn (22) erfasst.

**14.** Warenschaumaschine nach Anspruch 12, dadurch gekennzeichnet, dass das Markierungselement (52) bezüglich der Warenschaufläche (40) von einer X-Ausgangsstellung aus in X-Richtung verfahrbar ist und der andere X-Wegaufnehmer (56) die Bewegung des Markierungselements (52) relativ zur Warenschaufläche (40) erfasst.

**15.** Warenschaumaschine nach Anspruch 14, dadurch gekennzeichnet, dass das Markierungselement (52) auf einem X-Schlittensystem (49) gehalten ist.

**16.** Warenschaumaschine nach einem der voranstehenden Ansprüche, dadurch gekennzeichnet, dass das Markierungselement (52) auf einem Y-Schlittensystem (51) gehalten ist.

**17.** Warenschaumaschine nach einem der voranstehenden Ansprüche, dadurch gekennzeichnet, dass eine der X-Position des Markierungselements (52) entsprechend gehaltene Seitenkantenmeßeinrichtung (63) vorgesehen ist.

**18.** Warenschaumaschine nach einem der voranstehenden Ansprüche, dadurch gekennzeichnet, dass die Markensetzeinrichtung (68) relativ zu dem Markierungselement entgegen einer Wickelrichtung (44) der Stoffbahn (22) versetzt angeordnet ist.

**19.** Warenschaumschine nach Anspruch 18, dadurch gekennzeichnet, dass in einem oberen Bereich (80) und in einem unteren Bereich (84) der Warenschaufläche (40) jeweils eine Seitenkantenmeßeinrichtung (82 bzw. 86) angeordnet ist.

**Claims**

**1.** Method for detecting a flaw (42) in a fabric web (22) during a flaw inspection, wherein the flaw (42) is registered by its position in the X-direction being recorded by a mark (70) placed on the fabric web and at least one further positional detail together with a designation of the mark (70), characterized in that X- and Y-values of a system of points defining a boundary line (66) around the flaw (42) are determined and stored as further positional details and that the mark (70) and a side edge (62) of the fabric web (22) serve as reference points for the X- and Y-values, respectively, of the boundary line.

**2.** Method as defined in claim 1, characterized in that the mark (70) is placed on an edge region (72) of the fabric web (22).

**3.** Method as defined in claim 1 or 2, characterized in that the mark (70) is spaced from the boundary line (66) in the X-direction.

**4.** Method as defined in any of the preceding claims, characterized in that during the fabric inspection the mark (70) is arranged behind the boundary line (66), seen in the direction of winding (44).

**5.** Method as defined in any of the preceding claims, characterized in that the marks (70) are designated in accordance with their sequence.

**6.** Method as defined in any of the preceding claims, characterized in that for the purpose of designation the marks (70) are provided with a machine-readable recognition code (100).

7. Method as defined in any of the preceding claims, characterized in that the data of the boundary line (66) are noted on the mark (70) so as to be machine readable.

8. Method as defined in any of the preceding claims, characterized in that the reference point (102) is affixed to the mark (70) so as to be machine readable.

9. Method as defined in any of the preceding claims, characterized in that for each measurement of one of the Y-values while keeping the X-value constant the position of the side edge (62) is determined and the Y-value is then determined on the basis of this position.

10. Method as defined in claim 9, characterized in that the position of the side edge (62) is ascertained in front of and behind an area of fabric inspection, seen in the direction of winding (44), and that the position of the side edge (62) corresponding to the respective X-value is determined by interpolation.

11. Method as defined in any of the preceding claims, characterized in that an approximate X-position of the mark (70) spaced from a start of the fabric web is detected and stored.

12. Fabric inspection machine for detecting flaws in a fabric web, in particular, for performing the method as defined in any of claims 1 to 11, comprising an inspection area (40), a wind-off means (16), a wind-up means (30) and a registering device for the flaw comprising a computer unit (54) with a data memory as well as an input device for a designation of marks (70) placed on the fabric web (22) to identify an X-position of the flaws (42) and for at least one further positional detail, characterized in that the registering device comprises a mark-affixing device (68) as well as a marking element (52) displaceable in the X- and Y-directions relative to the fabric web (22) for detecting a system of points determining a boundary line (66) of the flaw (42), that the X- and Y-values of the system of points along which the marking element (52) moves are detectable and transferrable to the input device by displacement pickups (56, 58, 90) as a function of a reference point defined by the mark (70) and a side edge (62) of the fabric web (22), respectively, and that the computer unit (54) is designed such that it allocates the X- and Y-values of the system of points of the boundary line (66) to the designation of the marks (70) as further positional details and stores these details.

13. Inspection machine as defined in claim 12, characterized in that the fabric web (22) is displaceable back and forth in the X-direction from a location at which a mark is positioned and that one X-displacement pickup (90) detects the movements of the fabric web (22).

14. Inspection machine as defined in claim 12, characterized in that the marking element (52) is displaceable relative to the inspection area (40) in the X-direction starting from an initial X-position and the other X-displacement pickup (56) detects the movement of the marking element (52) relative to the inspection area (40).

15. Inspection machine as defined in claim 14, characterized in that the marking element (52) is held on an X-slide system (49).

16. Inspection machine as defined in any of the preceding claims, characterized in that the marking element (52) is held on a Y-slide system (52).

17. Inspection machine as defined in any of the preceding claims, characterized in that a side edge measuring device (63) held in accordance with the X-position of the marking element (52) is provided.

18. Inspection machine as defined in any of the preceding claims, characterized in that the mark-affixing device (68) is arranged relative to the marking element so as to be offset contrary to a direction of winding (44) of the fabric web (22).

19. Inspection machine as defined in claim 18, characterized in that a side edge measuring device (82 and 86) is arranged in an upper region (80) and a lower region (84), respectively, of the inspection area (40).

**Revendications**

1. Procédé de détection d'un défaut (42) dans une nappe de tissu (22) dans le cadre d'une recherche de défauts, suivant lequel le défaut (42) est enregistré par détermination de sa position dans la direction x au moyen d'un repère (70) placé sur la nappe de tissu et au moyen d'au moins une autre indication de position conjointement avec une détermination du repère (70), caractérisé en ce que comme plusieurs indications de position des coordonnées X et Y un groupe de points représentant une ligne de délimitation (66) passant autour du défaut (42) est déterminé et mémorisé et en ce que comme point de référence pour les coordonnées X et Y de ce groupe de points, le repère (70) respectivement la lisière (62) de la nappe de tissu (22) sont utilisés.

2. Procédé selon la revendication 1, caractérisé en ce que le repère (70) est posé sur une zone de bordure (72) de la nappe de tissu (22).

3. Procédé selon la revendication 1 ou 2, caractérisé en ce que le repère (70) est placé à distance de la ligne de délimitation (66) dans la direction X.

4. Procédé selon l'une des revendications précédentes, caractérisé en ce que lors de l'inspection du tissu le repère (70) est disposé en arrière de la ligne de délimitation (66) par rapport au sens de l'enroulement (44).

5. Procédé selon l'une des revendications précédentes, caractérisé en ce que la détermination des repères (70) s'effectue selon leur ordre.

6. Procédé selon l'une des revendications précédentes, caractérisé en ce que les repères (70) sont munis d'un code de reconnaissance (100) assimilable par une machine pour leur détermination.

7. Procédé selon l'une des revendications précédentes, caractérisé en ce que les données de la ligne de délimitation (66) sont notées sur le repère (70) de manière qu'elles soient assimilables par une machine.

8. Procédé selon l'une des revendications précédentes, caractérisé en ce que le point de référence (102) est posé sur le repère (70) de manière qu'il soit assimilable par une machine.

9. Procédé selon l'une des revendications précédentes, caractérisé en ce que la position de la lisière (62) est déterminée à chaque mesure d'une coordonnée Y avec maintien de la coordonnée x à une valeur constante et la coordonnée Y se détermine à partir de cette position.

10. Procédé selon la revendication 9, caractérisé en ce que la position de la lisière (62) est constatée en amont et en aval d'une zone d'inspection du tissu par rapport au sens (44) de l'enroulement et en ce que la position de la lisière (82) correspondant à la coordonnée X particulière se détermine par interpolation.

11. Procédé selon l'une des revendications précédentes, caractérisé par la détection et la mémorisation d'une position approximative X du repère (70) représentée par sa distance à un début de la nappe de tissu.

12. Machine d'inspection de tissu pour la détection de défauts sur une nappe de tissu, en particulier pour la mise en oeuvre du procédé selon l'une des revendications 1 à 11, comprenant une surface (40) d'inspection de tissu, un dispositif de déroulement (16), un dispositif d'enroulement (30) et un dispositif d'enregistrement du défaut qui comporte une calculatrice (54) équipée d'une mémoire de données ainsi que d'un dispositif d'entrée destiné à une détermination de repères (70) posés sur la nappe de tissu (22) pour signaler une position X des défauts (42) et à au moins une autre indication de position, caractérisé en ce que le dispositif de signalisation comprend un dispositif (68) de pose de repères ainsi qu'un élément de repérage (52) déplaçable dans les directions X et Y par rapport à la nappe de tissu (22) et destiné à la détection d'un groupe de points représentant une ligne de délimitation (66) du défaut (42), en ce que les coordonnées X et Y du groupe de points sur lesquelles passe l'élément de repérage (52) sont détectables par des capteurs de course (56,58,90) en fonction d'un point de référence défini par le repère (70) respectivement en fonction d'une lisière (62) de la nappe de tissu (22) et sont transmissibles au dispositif d'entrée et en ce que la calculatrice (54) est conçue de manière qu'elle attribue à la détermination des repères (70) comme d'autres indications de position ; les coordonnées X et Y du groupe de points de la ligne de délimitation (66) et les mémorise.

13. Machine d'inspection de tissu selon la revendication 12, caractérisée en ce que la nappe de tissu (22) est déplaçable alternativement dans la direction X à partir d'un lieu de positionnement d'un repère et en ce que l'un des capteurs de course X (90) détecte les mouvements de la nappe du tissu (22).

14. Machine d'inspection de tissu selon la revendication 12, caractérisée en ce que l'élément de repérage (52) est déplaçable dans la direction X à partir d'une position initiale X par rapport à la surface (40) d'inspection du tissu et l'autre capteur de course X (56) détecte le mouvement de l'élément de repérage (52) par rapport à la surface (40) d'inspection du tissu.

15. Machine d'inspection de tissu selon la revendication 14, caractérisée en ce que l'élément de repérage (52) est monté sur un système de curseur X (49).

16. Machine d'inspection de tissu selon l'une des revendications précédentes, caractérisée en ce que l'élément de repérage (52) est monté sur un système de curseur Y (51).

17. Machine d'inspection de tissu selon l'une des revendications précédentes, caractérisée en ce qu'un dispositif de mesure (63) destiné au repérage d'une lisière est fixé de manière qu'il soit en correspondance avec la position X de l'élément de repérage (52).

18. Machine d'inspection de tissu selon l'une des revendications précédentes, caractérisée en ce que le dispositif (68) de pose de repères est disposé de manière qu'il soit décalé par rapport à l'élément de repérage dans le sens inverse à celui d'un sens d'enroulement (44) de la nappe de tissu (22).

19. Machine d'inspection de tissu selon la revendication 18, caractérisée en ce qu'un dispositif de mesure (82 ainsi que 86) destiné au repérage d'une lisière est disposé dans une zone supérieure (80) et un autre; dans une zone inférieure (84) de la surface (40) d'inspection du tissu.

FIG.1

FIG.2

FIG.3

FIG.4

FIG.5

FIG.7

EP 0 303 722 B1

FIG.6

FIG 8

20

FIG.9

FIG.10

FIG. 11